# EUROPEAN PATENT APPLICATION

(11) **EP 0 668 095 A1**
(43) Date of publication of application: **23.08.1995**
(21) Application number: 94300643.7
(22) Date of filing: 28.01.1994
(51) Int. Cl.: B01D 47/02, G01N 1/22, G01N 15/06

(54) **Air/liquid contacting apparatus**

(71) Applicant: SECRETARY OF STATE FOR DEFENCE IN HER BRITANNIC MAJESTY'S GOV. OF THE UNITED KINGDOM OF GREAT BRITAIN AND NORTHERN IRELAND, London SW1A 2HB (GB)
(72) Inventor: Squirrell, David James, Chem. & Biol. Def. Estab., Salisbury, Wiltshire SP4 0JG (GB)
(74) Representative: Beckham, Robert William

(57) **Abstract**

A gas-liquid interface apparatus is provided adapted for collecting a flow of gas entraining a particulate and/or aerosol material and mixing it with a flow of liquid characterised in that it comprises a chamber, a flow path for passage of the liquid between inlet and outlet orifices in a lower part of the chamber volume; a pump for supplying the liquid to the inlet orifice, a liquid level sensor oriented such as to sense the presence of liquid at set height above the inlet and/or outlet orifice; an inlet for supplying the flow of gas into the chamber in an orientation such that it deposits particulates and/or aerosol therein into liquid flowing between the liquid inlet and outlet orifices, and and outlet for removing air from the chamber after it has deposited the particulates and/or aerosol upon that liquid; wherein the sensor is adapted to control the pump such as to increase the rate of supply of liquid to the inlet orifice when the the liquid level falls below the set level and reduce the rate of supply of liquid when

## Description

The present invention relates to an gas-liquid interface suitable for use in supplying a particulate fraction, eg, an aerosol fraction, derived from a gaseous medium to a liquid flow, whereby it becomes entrained in the liquid such that it is provided in a form suitable for liquid mediated analytical techniques. More particularly an air-liquid interface is provided that allows particulates derived from the atmosphere, whether from inside or outside an enclosure, using an air particle separator to be mixed with a liquid flow whereby the effects of factors such as air temperature and relative humidity do not cause dramatic changes in particulate concentration in the outgoing liquid due to changes in evaporation. Particularly the interface is suitable for use with high volume per unit time separators such as cyclones or a virtual impactors.

Air particle separators may be used to sample particulates present in the atmosphere, including aerosols, for the purposes of analysis. Such analysis may be for environmental monitoring purposes including for military monitoring of potential chemical or biological warfare hazards and commonly deposit the particulates into a collecting or processing fluid such as water. Typical devices may process air at a rate of tens to many hundreds of litres per minute and thus present problems of this air flow causing evaporation of collecting processing liquid. As the surrounding air changes in humidity and/or temperature the rate of evaporation of the processing liquid changes and thus the dilution of particulates therein may be changed giving rise to changes in analytical results based upon tests carried out on the liquid.

It is known to counter evaporation problems by providing active control of the collecting or processing fluid whereby it is supplied in excess, but this can only lead to a greatly diluted sample when evaporation is low. Furthermore whereas most air particle separators work in batch mode, the present interface is designed to enable continuous separation such that air particulate content analysis may be monitored continuously. Under such conditions it is required that significant dilution changes over a short period of time are avoided. Apparatus using batch separation operation are affected to a lesser degree as an average dilution per unit time is being worked with.

In a first aspect of the present invention there is provided an air-liquid interface apparatus adapted for collecting a flow of gas entraining a particulate material and mixing it with a flow of liquid characterised in that the interface comprises a chamber, a flow path for passage of the liquid between inlet and outlet orifices in a lower part of the chamber volume; a pump for supplying the liquid to the inlet orifice, a liquid level sensor oriented such as to sense the presence of liquid at set height above the inlet and/or outlet orifice; an inlet for supplying the flow of air into the chamber in an orientation such that it impinges on liquid flowing between the liquid inlet and outlet orifices, and and outlet for removing air from the chamber after it has impinged upon that liquid; wherein the sensor is adapted to control the pump such as to increase the rate of supply of liquid to the inlet orifice when the the liquid level falls below the set level and reduces the rate of supply of liquid when that level is reached.

In a preferred form of this aspect of the present invention the liquid level sensor is adapted to send signals indicative of whether or not the level of the liquid is at the set height above the inlet and outlet orifices to a computer which in turn controls operation of the pump. In this way the rate of increase or decrease of supply of liquid may be modified in compliance with a computer programme which in turn may be influenced by readings obtained from further pieces of apparatus upstream and/or downstream of the liquid outlet, eg. such as when the concentration of particulates in the collection/processing fluid is desired to be changed for reason of being too concentrated.

In the latter case, for example, it may be decided to override the sensor and continue to supply liquid at a high rate.

In a preferred form of the apparatus of the invention there is provided a suction means connected to the outlet for removing air from the chamber whereby the flow of air from the air particle separator is actively drawn into the chamber and caused to impact upon the liquid flow such that entrained particles are transferred. In this manner air bubbles in the liquid are effectively removed. For this purpose the outlet for removing air from the chamber should preferably be in the upper part of its volume, at least at the same level as the air inlet, and preferably above it.

It will be realised by those skilled in the art that once particulates have become entrained in the collection/processing liquid it will then be fed to analytical instruments downstream of the liquid outlet orifice. It will be realised that these intruments may in turn be fed with the liquid by pumps, eg. such as peristaltic pumps acting through flexible tubing carrying the liquid. In such case the flow of liquid from the chamber via the liquid outlet orifice may also be controlled by control of these downstream pumps, which in turn may be under control of the computer receiving signals from the liquid level sensor. In this manner the operation of the whole air-particule separator, liquid-interface and analytical instrument ensemble may be controlled from a single computer.

When the interface is to be used in conjunction with an air-particle separator of very high flow rate, such that a degree of liquid splashing and displacement is effected by impingement of the air, it is desirable to include a baffle above the liquid level sensor to render it immune to localised influences. In this case it may be that the particulates in the air may become impacted upon the baffle, thus a further orifice is advantageously provided above the baffle such that collection/processing fluid may be supplied continously over the baffle and wash particulates down into the liquid flow path; this being under command of the sensor signal as before. This supply of further liquid may be effected by passing an adjustable tube through the further orifice in a liquid sealing manner such that the end within the chamber may be adjusted vertically and horizontally for introducing liquid directly into the liquid above the baffle. When using this wash down system the liquid inlet in the lower part of the chamber may be closed off or used as a further liquid outlet.

In operation where the air is likely to contain large or insoluble particulates unsuitable for processing downstream it is desirable that there be provided a further liquid outlet orifice provided at a lower position in the chamber than that of the outlet feeding the analytical apparatus. This orifice is collected to a pump for removing dense particles in liquid at the bottom of the chamber and transporting it to waste or a still further analytic step.

The liquid sensor device may be of any convenient design that is reactive enough to respond to changes of liquid level in time to activate the supply pump and prevent drying out of the chamber. One such device is that which operates by internal reflectance whereby light is emitted from a light source and reflected back to a light sensitive photocell from a plastics reflector in the chamber volume when that reflector is surrounded by gas, eg. air. When the reflector is surrounded by liquid the combined refractive index of the plastics is different from that in gas such that the light no longer is reflected to the light sensor, thus the presence of the liquid at the sensor reflector is immediately indicated by change in electric signal from the photocell.

The gas-liquid interface of the invention will now be illustrated by way of example only by reference to the following non-limiting Examples and Figures. Further embodiments of the invention will occur to those skilled in the art in the light of these.

### FIGURES

Figure 1: shows a cross section through a diagrammatic representation of gas liquid interface of the present invention as described in Example 1 as viewed from in elevation
Figure 2: shows a cross section through a diagrammatic representation of gas liquid interface of the present invention as described in Example 2 as viewed from in elevation

### EXAMPLE 1: Air liquid interface apparatus.

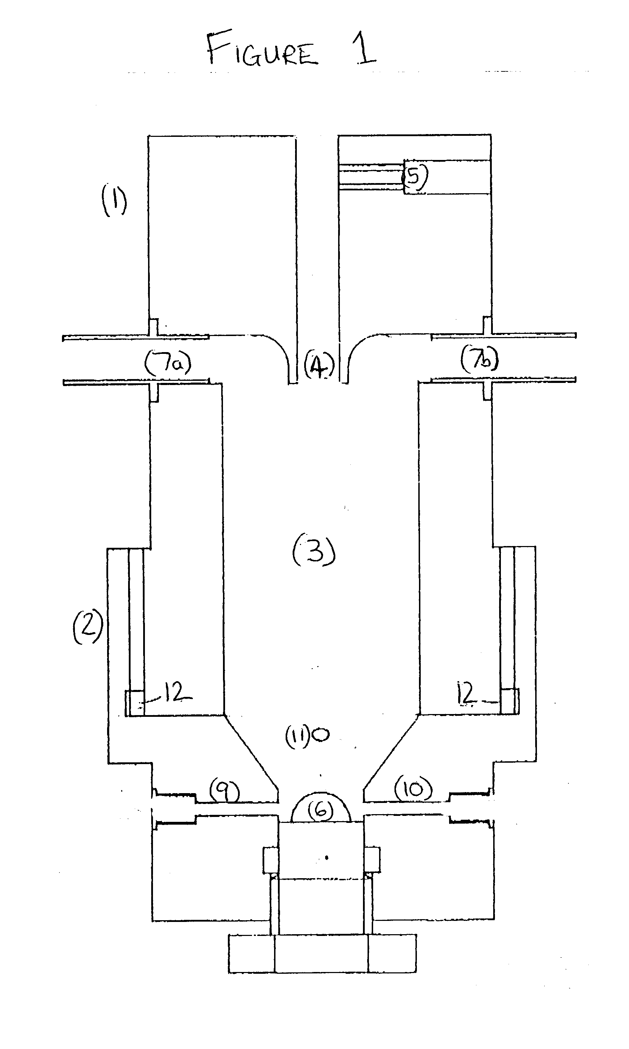

An air-liquid interface of the invention consists of a perspex housing made from two blocks (1) and (2) allowing function of the apparatus to be visually monitored (see Figure 1). The blocks engage via a screw thread (12).

Air enters chamber (3) formed between the two blocks through a tube (not shown) outputting particulate fraction from a cyclone or high velocity virtual impactor. The tube passes through the channel (4) drilled in the upper block and held in place by a grub screw located in channel (5). The height of the tube open end within the chamber (3) with regard to a liquid level sensor (6) is adjustable by raising or lowering it in the channel (4) after loosening the screw in channel (5).

Suction is applied to exhaust channels (7a) and (7b) to draw air from the cyclone or impactor via the tube into the chamber (3). Particles from the air are impacted into an aqueous collection fluid (8) in the lower part of the chamber as that flows across the sensor (6), entering by channel (9) and leaving through channel (10). The fluid is drawn off from the chamber (3) at a constant rate whereas the rate at which it enters is governed by a pump (not shown) controlled by the sensor.

When the top of the sensor (6) is exposed to air light that had previously passed from a source therein out of the sensor housing is reflected back to a photocell within the sensor and this sends an electrical signal to the pump casuing it to pump more collection fluid into the chamber. In this regard the sensitive portion of the sensor is at the top end of the hemispherical cover illustrated.

A further orifice (11) in the chamber wall is provided for supplying collection fluid in washdown mode when a baffle (eg, inverted U-shaped shield) is placed over but spaced from the sensor such that when high air flow rates air being used splashing is avoided yet particulates might be washed from the baffle upper surface. In this mode, the usually plugged orifice (11) serves to admit a tube (eg. of stainless steel) through which collection fluid is directed into the airflow from tube passing through channel (4) from the cyclone or impactor.

### EXAMPLE 2: Air liquid interface apparatus, second variant.

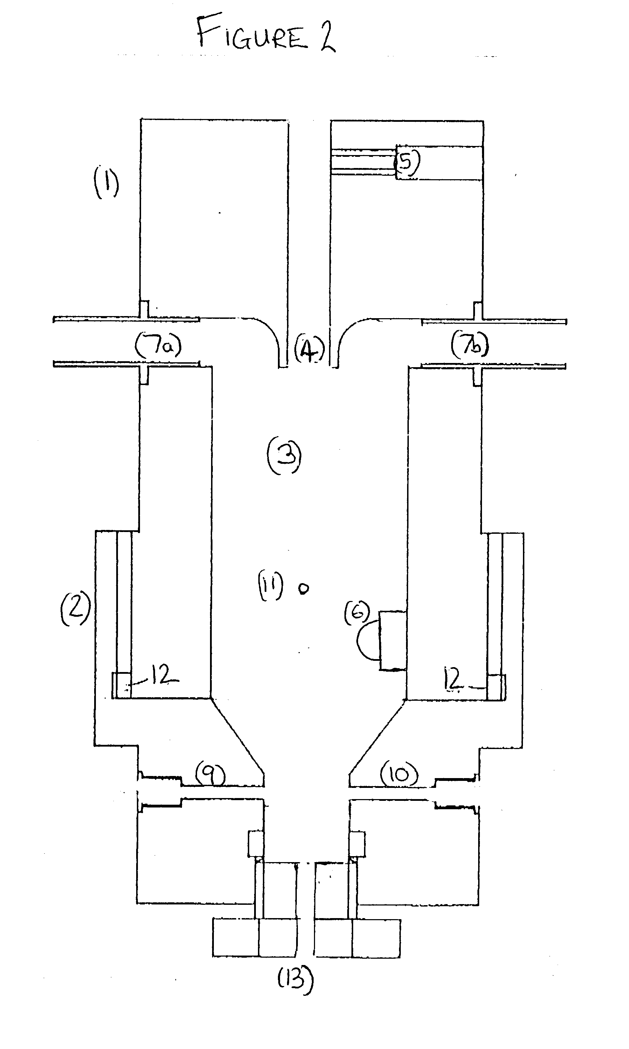

When larger particulates build up, or where a constant presence of such particulates is likely, it may be necessary to remove these whilst maintaining operation of the interface. The apparatus of Figure 2 mounts the liquid level sensor (6) on a sidewall of the chamber (3) and has an orifice (13) in the bottom surface of the chamber whereby a waste pump (not shown) may be operated to remove larger particulates suspended in fluid at regular intervals or, under manual control, as required.

## Claims

1. A gas-liquid interface apparatus adapted for collecting a flow of gas entraining a particulate and/or aerosol material and mixing it with a flow of liquid characterised in that the interface comprises a chamber, a flow path for passage of the liquid between inlet and outlet orifices in a lower part of the chamber volume; a pump for supplying the liquid to the inlet orifice, a liquid level sensor oriented such as to sense the presence of liquid at set height above the inlet and/or outlet orifice; an inlet for supplying the flow of gas into the chamber in an orientation such that it deposits particulates and/or aerosol therein into liquid flowing between the liquid inlet and outlet orifices, and and outlet for removing air from the chamber after it has deposited the particulates and/or aerosol upon that liquid; wherein the sensor is adapted to control the pump such as to increase the rate of supply of liquid to the inlet orifice when the the liquid level falls below the set level and reduce the rate of supply of liquid when that level is reached.

2. A gas-liquid interface apparatus as claimed in claim 1 characterised in that the level sensor is adapted to send signals, indicative of whether or not the level of the liquid is at the set height above the inlet and outlet orifices, to a computer which in turn controls operation of the pump.

3. A gas-liquid interface apparatus as claimed in claim 1 or claim 2 wherein that the rate of increase or decrease of supply of liquid may be modified in compliance with a computer programme which in turn is influenced by signals obtained from further pieces of apparatus upstream and/or downstream of the liquid outlet

4. A gas-liquid interface apparatus as claimed in claim 3 wherein the signals obtained from further pieces of apparatus include those indicative of concentration of particulates whereby increased concentration causes increase of supply of liquid.

5. A gas-liquid interface as claimed in any one of the preceding claims characterised in that a suction means is connected to the outlet for removing air from the chamber whereby the flow of air from the air particle separator is actively drawn into the chamber and caused to impact upon the liquid flow such that entrained particles are transferred.

6. A gas-liquid interface as claimed in any one of the preceding claims wherein liquid flow through the chamber is controlled by the action of pumps downstream of the chamber.

7. A gas-liquid interface as claimed in claim 1 characterised in that a baffle is provided between the liquid level sensor and the gas inlet, and an orifice is provided above the baffle for supply of the liquid into the gas flow, over the baffle and out of the liquid exit orifice.

8. A gas-liquid interface as claimed in claim 1 wherein as further liquid outlet orifice is provided in the bottom of the chamber for removal of fluid containing densest particulates from the chamber.

9. A gas-liquid interface as claimed in any one of the preceding claims wherein the liquid level sensor has a casing that reflects light from an internal source into a photocell when exposed to air and passes that light into the chamber when covered by the liquid.

10. An analyser apparatus for detecting the presence of target materials in the atmosphere comprising an air particle separator for supplying collection liquid or processing liquid with air concentrated in particulates and/or aerosol, and feeding that liquid to one or more analytical stations for identification and/or quantification of the target materials therein, characterised in that the air particle separator supplies the air concentrated in particulates and/or aerosol to the colllection liquid or processing liquid with a gas-liquid interface as claimed in any one of claims 1 to 9.
